# EUROPEAN PATENT APPLICATION

(11) **EP 3 992 333 A1**
(43) Date of publication of application: **04.05.2022**
(21) Application number: 21201462.5
(22) Date of filing: 07.10.2021
(51) Int. Cl.: C25D 11/02, C25D 11/18, F02F 1/00, F02F 3/10

(54) **PISTON FOR INTERNAL COMBUSTION ENGINE AND MANUFACTURING METHOD FOR THE SAME**

(30) Priority: 29.10.2020 JP 2020181456
(71) Applicant: Suzuki Motor Corporation, Shizuoka 432-8611 (JP)
(72) Inventor: Murakami, Haruhiko, Hamamatsu-shi, 432-8611 (JP); Fujita, Masahiro, Hamamatsu-shi, 432-8611 (JP)
(74) Representative: Henkel & Partner mbB

(57) **Abstract**

[Problem to be Solved] To provide a piston for an internal combustion engine, having a top ring groove provided with an anodized film for reducing the flow rate of blow-by gas and the particle number PN, and a manufacturing method for the same.

[Solution] An inner surface 15 of the top ring groove of the piston for an internal combustion engine is anodically oxidized through the AC/DC superimposition electrolytic process to form an anodized film 23a having cells extending in random directions and enclosing a periphery of silicon 16 in a branched structure in the random direction. A blasting process is applied to the anodized film at a shooting pressure ranging between greater than 0.01 MPa and less than 0.05 MPa using a blasting material 50 having a median particle diameter ranging between greater than 20 µm and less than 50 µm to obtain the anodized film 23b having surface roughnesses Rpk and Ra, each of which is less than 1.0 µm.

## Description

### [Technical Field]

The present invention relates to a piston for an internal combustion engine and relates to a manufacturing method therefor.

### [Background Art]

A piston for an internal combustion engine, such as an automobile engine, has a piston ring fitted with an outer circumferential surface for the purpose of maintaining gas-tight seal of the combustion chamber and preventing infiltration of oil into the combustion chamber. The piston ring is fitted with a ring groove formed in the outer circumferential surface of the piston. Wear and adhesion are likely to occur between the top ring and the top ring groove of the ring groove, which is positioned closest to the crown surface of the piston. An anodizing treatment is executed on the top ring groove to improve wear resistance and aluminum adhesion resistance thereof.

In the case in which the anodized film is formed on the inner surface of the top ring groove of piston made of an aluminum alloy, which contains silicon (Si) as the component that in particular contributes to the wear resistance and the aluminum adhesion resistance, the anodized film has a non-smooth surface due to Si contained in the aluminum alloy. In engine operation, numerous microgaps are generated between the top ring groove and the top ring, resulting in failure such as increase in the flow rate of blow-by gas.

Patent Literature 1 discloses reduction in the flow rate of blow-by gas in engine operation. Specifically, each particle diameter of primary phase Si and eutectic Si, which are crystallized in the Al-Si alloy-based casting for forming the piston main body, is set to 10 µm or less. Executing anodizing treatment to the top ring groove formed in the outer circumference of the piston main body smoothens the surface of the anodized film with a surface roughness Ra of 1.5 µm or less. This makes it possible to reduce the flow rate of blow-by gas in engine operation.

### [Citation List]

### [Patent Literature]

[Patent Literature 1] JP H09-159022 A

### [Summary of Invention]

### [Problem to be Solved by the Invention]

However, in the example of Patent Literature 1, the surface roughness Ra of each of the anodized films is within a range from 1.1 to 1.5 µm. As disclosed in Patent Literature 1, the piston main body made of a predetermined aluminum alloy material is subjected to anodizing treatment. In this case, the lower limit of the surface roughness Ra of the anodized film cannot be made lower than 1.1 µm. It is therefore difficult to further reduce the flow rate of blow-by gas.

The number of particles of particulate matter (i.e., particle number PN) is also demanded to be reduced, in addition to the flow rate of blow-by gas. The blow-by gas containing an oil component is partially discharged as micro-particles into exhaust gas, which is considered to be one of causes of the particle number PN.

In consideration of the problems, an object of the present invention is to provide the piston for an internal combustion engine having an anodized film formed on the top ring groove for reducing the flow rate of blow-by gas and the particle number PN, and to further provide a manufacturing method for a piston for an internal combustion engine.

### [Means for Solving the Problems]

In order to achieve the above, the present invention is, in one aspect, a method for manufacturing a piston for an internal combustion engine, which includes: a step of forming an anodized film on an inner surface of a top ring groove of a piston for an internal combustion engine by an AC/DC superimposition electrolytic process, and a step of blasting the anodized film at a shooting pressure ranging between greater than 0.01 MPa and less than 0.05 MPa by using a blasting material having a median particle diameter ranging between greater than 20 µm and less than 50 µm.

In addition, the present invention is, in another aspect, a piston for an internal combustion engine having a top ring groove in an outer circumferential surface and including an anodized film on an inner surface of a top ring groove. Cells of the anodized film extend in random directions to the inner surface of the top ring groove and enclose a periphery of silicon in the anodized film while branching in random directions. The anodized film has a surface roughness Rpk according to JIS B0671-2 of less than 1.0 µm, and a surface roughness Ra according to JIS B0601 of less than 1.0 µm.

### [Advantageous Effects of Invention]

According to the present invention, the AC/DC superimposition electrolytic process is executed to form the anodized film on the inner surface of the top ring groove of the piston for an internal combustion engine. The anodized film is subjected to the blasting step at a shooting pressure ranging between greater than 0.01 MPa and less than 0.05 MPa by using a blasting material with a median particle diameter ranging between greater than 20 µm and less than 50 µm. This makes it possible to form an anodized film having a surface roughness Rpk of less than 1.0 µm and a surface roughness Ra of less than 1.0 µm. The flow rate of blow-by gas and the particle number PN can further be reduced.

### [Brief Description of Drawings]

[Figure 1] Figure 1 is a cross-sectional view of a piston for an internal combustion engine according to an embodiment of the present invention, which schematically illustrates a periphery of a top ring groove.
[Figure 2] Figure 2 is a cross-sectional view of a piston for an internal combustion engine according to another embodiment of the present invention, which schematically illustrates a periphery of the top ring groove.
[Figure 3] Figure 3 shows cross-sectional views schematically illustrating a DC electrolysis film in states before and after a blasting processing.
[Figure 4] Figure 4 shows cross-sectional views of an AC/DC superimposition electrolysis film in states before and after the blasting step of the manufacturing method according to the present invention.
[Figure 5] Figure 5 is a cross-sectional view schematically illustrating the process for executing anodizing treatment around the top ring groove.
[Figure 6] Figure 6 shows photographs taken by a scanning electron microscope, each showing a surface of the AC/DC superimposition electrolysis film in each state before and after the blasting step of the manufacturing method according to the present invention.

### [Mode for Carrying Out the Invention]

Referring to the drawings, an explanation will be made with respect to an embodiment of the piston for an internal combustion engine and to a manufacturing method therefor according to the present invention. The drawings are not necessarily illustrated to scale as they are intended to facilitate understanding.

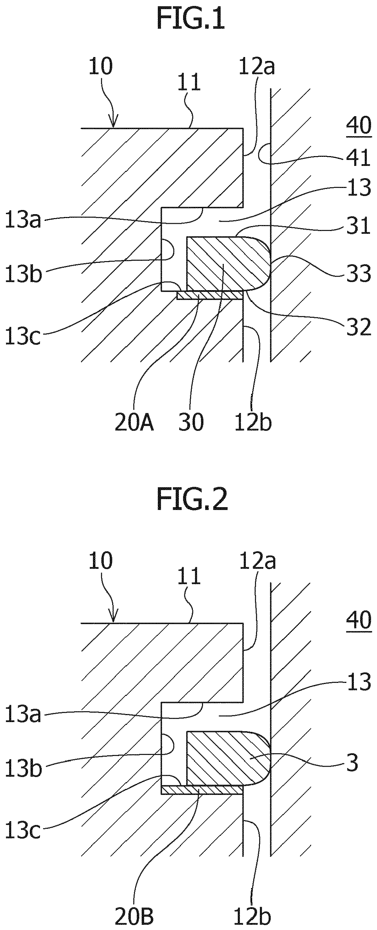

As Figure 1 illustrates, a piston 10 for an internal combustion engine according to the embodiment has a top ring groove 13 in an outer circumferential surface 12. Three ring grooves are formed, which include a top ring groove 13, a second ring groove (not shown), and an oil ring groove (not shown), in order, from the side close to the piston crown surface 11. A top ring 30 is fitted with the top ring groove 13. A second ring (not shown) is fitted with the second ring groove. An oil ring (not shown) is fitted with the oil ring groove.

The piston 10, for an internal combustion engine, is made of aluminum or aluminum alloy. The aluminum alloy may contain silicon (Si) as the component serving to provide wear resistance and aluminum adhesion resistance. In addition, a ring, such as the top ring 30, is made of high-carbon steel, martensitic stainless steel, or the like. The ring, such as the top ring 30, is formed to have a substantially C-like shape having an open part in a circumferential direction. The ring is inserted into the ring groove such as the top ring groove 13 of the piston 10 while having its diameter elastically widened. The ring is then elastically restored to reduce its diameter and is fitted with the inside of the ring groove.

An outer circumferential surface 33 of the top ring 30 protrudes toward the outer circumference from the outer circumferential surface 12 of the piston 10 for an internal combustion engine. The outer circumferential surface 12 of the piston 10 includes a section called a top land 12a formed between a piston crown surface 11 and the top ring groove 13, a section called a second land 12b formed between the top ring groove 13 and the second ring groove (not shown), and a section called a third land (not shown) formed between the second ring groove and the oil ring groove (not shown). Each outer circumferential surface of the rings such as the top ring 30 protrudes outward from the outer circumferential surface 12 of the piston 10 for an internal combustion engine. The piston 10 for an internal combustion engine, which has been fitted with the respective rings, such as the top ring 30, is inserted into a cylinder 40 by elastically reducing each diameter of the rings such as the top ring 30. In the state in which the piston 10 for an internal combustion engine is inserted into the cylinder 40, the respective rings such as the top ring 30 are pressed against an inner wall surface 41 of the cylinder 40 under elastic force. The top ring 30 and the second ring serve to maintain the gas-tight seal of the combustion chamber. The oil ring serves to scrape off the residual oil on the inner wall surface 41 of the cylinder 40.

The top ring groove 13 formed in the outer circumferential surface 12 of the piston 10 for an internal combustion engine has an inner surface close to the piston crown surface 11, which is called a lower surface 13a, an inner surface close to the second ring groove (not shown), which is called a lower surface 13c, and an inner surface at the bottom of the groove between those surfaces is called a side surface 13b. In this embodiment, an anodized film 20A is formed on the lower surface 13c of the top ring groove 13 at least in a region in contact with the top ring 30. This region is variable depending on the design of the piston. For example, it is preferable to determine the region with the length from the outer circumferential surface 12, which accounts for at least 90% of the length (groove width) from the outer circumferential surface 12 of the piston 10 for an internal combustion engine to the side surface 13b of the top ring groove 13. More preferably, the length of the region accounts for at least 80%, and even more preferably, the length of the region accounts for at least 70%.

Forming the anodized film 20A on the lower surface 13c of the top ring groove 13 as such, as Figure 1 illustrates, as for the piston 10 for an internal combustion engine, since the inner pressure of the combustion chamber at the side of the piston crown surface 11 is high in the compression and expansion strokes, a lower surface 32 of the top ring 30 is brought into tight contact with the lower surface 13c of the top ring groove 13. In addition, although not shown, in the intake stroke, the upper surface 31 of the top ring 30 is brought into tight contact with the upper surface 13a of the top ring groove 13 of the piston 10 for an internal combustion engine. Every execution of these strokes with repetition causes the piston 10 for an internal combustion engine to move between the upper surface 13a and the lower surface 13c of the top ring groove 13. As wear and adhesion tend to occur between the lower surface 13c of the top ring groove 13 and the top ring 30, the anodized film 20A is required to be formed on the lower surface 13c of the top ring groove 13 for improving the wear resistance and the aluminum adhesion resistance.

It is not essential to form the anodized film on the upper surface 13a of the top ring groove 13. As the top ring 30 is brought into tight contact with the cylinder 40 by tensile force, the top ring 30 does not contact the side surface 13b of the top ring groove 13. Accordingly, it is not necessary to form the anodized film on the side surface 13b of the top ring groove 13. As described above, formation of the anodized film 20A only on the lower surface 13c of the top ring groove 13 allows reduction in the area of the inner surface of the top ring groove 13 for anodizing treatment. In comparison with a case in which the anodizing treatment is executed on the entire inner surface of the top ring groove 13 (that is, upper surface 13a, side surface 13b, and lower surface 13c), reduction in the area for anodizing treatment may decrease flow of electrical current. This makes it possible to lessen surface roughness. In particular, the treated metal surface that is not anodically oxidized is considerably smoother, with less surface roughness, than that of the anodized film. Making the area of treated metal surface larger is effective for suppressing blowby.

As for the surface roughness of the anodized film 20A, the surface roughness Rpk in conformity with JIS B0671-2 is less than 1.0 µm, and the surface roughness Ra in conformity with JIS B0601 is less than 1.0 µm. The surface roughness Ra is an index relating to the characteristic of the arithmetic average roughness of the contour curve. In addition, the surface roughness Rpk is an index relating to the characteristic of average height of a protruding peak above a core of the roughness curve, which is available for evaluating the characteristics of a surface of a plateau structure. The "plateau structure" refers to a structure having the surface composed of a plateau part (flat part) and a valley part, as prescribed in JIS-B0671. The use of the surface roughness Rpk allows evaluation of gas-tight sealing of the anodized film 20A. By setting the surface roughness Rpk of the anodized film 20A to the value less than 1.0 µm, the contact area with the lower surface 32 of the top ring 30 is increased when a combustion explosion occurs in the engine, to improve gas-tight sealing. This makes it possible to suppress passage of blow-by gas in engine operation. By setting the surface roughness Ra to the value less than 1.0 µm, deposition of oil in the valley part of the anodized film 20A may be suppressed. This makes it possible to suppress the blow-by gas that contains oil component, and further suppress the particle number PN.

The present invention is not limited to the embodiment as above. In another embodiment, an anodized film 20B may be formed over an entire surface of the lower surface 13c of the top ring groove 13 of the piston 10 for an internal combustion engine, as shown in Figure 2. Referring to Figure 1, the anodized film 20A can be formed only on the region of the lower surface 13c, which is in contact with the top ring 30, so that the area for anodizing treatment can be further reduced. This makes it possible to lessen the surface roughness, resulting in further decrease in the blow-by flow rate in engine operation.

The method for forming the anodized film 20 with the aforementioned surface roughness will be described. The method of the embodiment implements a film formation step for forming the anodized film (hereinafter referred to as "AC/DC superimposition electrolysis film") by executing anodizing treatment to the lower surface 13c of the top ring groove 13 through the AC/DC superimposition electrolytic process. The method then implements a blasting step for blasting the anodized film at a predetermined shooting pressure using a predetermined blasting material.

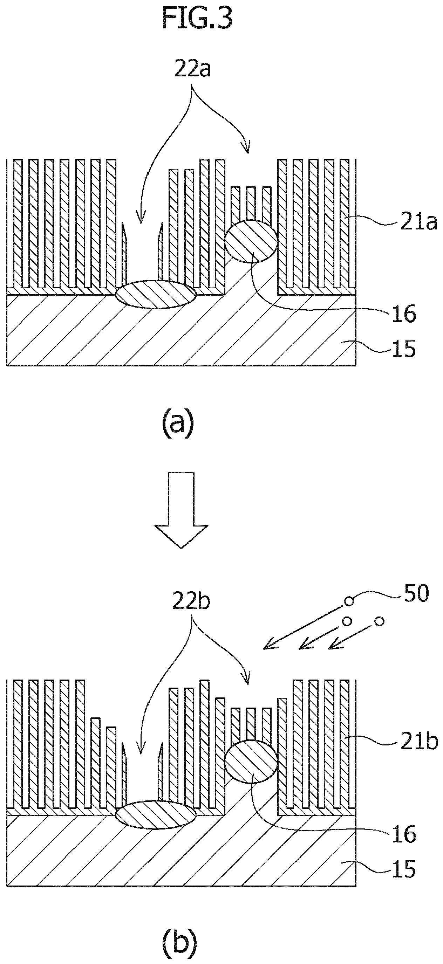

In addition to the AC/DC superimposition electrolytic process, the DC electrolytic process is known as a process for anodizing treatment. It is not possible to impart the predetermined surface roughness to the anodized film formed through the DC electrolytic process (hereinafter referred to as "DC electrolysis film") even if the blasting process is executed. The DC electrolytic process is a method for executing the anodizing treatment processing on the aluminum alloy member to be electrolytically processed at a constant DC voltage. As Figure 3(a) shows, an anodized film (DC electrolysis film) 21a formed through the DC electrolytic process grows only vertically to the surface of an aluminum alloy member 15. The growth of the anodized film 21a is hindered by silicon 16 contained in the aluminum alloy member 15 to be electrolytically processed, resulting in a plurality of large voids 22a formed in the surface.

Figure 3(b) shows an anodized film 21b obtained by executing the blasting process to the DC electrolysis film 21a. Referring to Figure 3(b), the DC electrolysis film 21b is formed on the lower surface 13c of the top ring groove. A blast material 50 for the blasting process is projected diagonally to the surface of the DC electrolysis film 21b. A tip end of a cell of the blasted DC electrolysis film 21b is shaved off by the blast material 50, and furthermore, the cell is broken around the void 22b. This increases the surface roughnesses Rpk and Ra. It is impossible to make these values less than 1.0 µm.

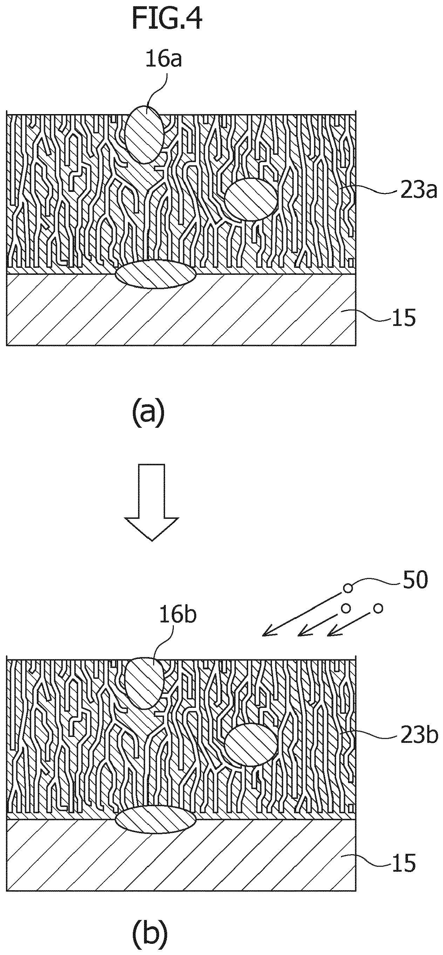

In the embodiment, the anodizing treatment is executed through the AC/DC superimposition electrolytic process. The AC/DC superimposition electrolytic process is implemented for anodizing treatment by repeatedly executing the process step for applying a positive voltage to the aluminum alloy member to be electrolytically processed, and the process step for removing electrical charges. As Figure 4(a) shows, an anodized film (AC/DC superimposition electrolysis film) 23a formed through the AC/DC superimposition electrolytic process grows in a random direction to the surface of the aluminum alloy member 15 with no orientation. The film grows in a randomly branched structure while retaining silicon 16a contained in the aluminum alloy member 15 to be electrolytically processed. This makes it possible to form the anodized film 23a with a dense and smooth surface.

Referring to Figure 4(b), after blasting the AC/DC superimposition electrolysis film 23a, a blasted AC/DC superimposition electrolysis film 23b has its protruded part only shaved to hardly cause loss of the cell. This makes it possible to make the surface further smoother. Figure 4 shows that the protruding portion of the silicon 16b is shaved. The embodiment is not limited to the aforementioned case. There may be a case in which the protruded part is formed on the surface of the cell growing in a random direction. The protruded part may be shaved off by blasting to attain a smooth surface. It is possible to make both the surface roughnesses Rpk and Ra of the blasted AC/DC superimposition electrolysis film 23b less than 1.0 µm.

The blast material 50 used for blasting has a median particle diameter ranging between greater than 20 µm and less than 50 µm. Making the median particle diameter greater than 20 µm hinders the blasting material 50 from reaching the deep regions of the valley part of the anodized film 23a, and produces a plateau structure. Making the median particle diameter less than 50 µm suppresses uneven contact with the blasting material 50, suppresses projection variability according to a projected region, and yields an even smoother surface.

Preferably, the lower limit of the median particle diameter of the blast material 50 is at least 22 µm, more preferably, at least 25 µm, and further preferably, at least 28 µm. Preferably, the upper limit of the median particle diameter of the blasting material 50 is at most 45 µm, more preferably, at most 40 µm, and further preferably, at most 35 µm.

The blasting material 50 is not limited to a particular type, but it is preferable to use a non-polishing type blasting material. Preferably, the non-polishing type blasting material is granulated with no sharp corners, and is specifically of the spherical type. Preferably, the blasting material 50 is glass-based, alumina, ceramic-based such as silicon carbide and silicon nitride, metal-based, or resin-based without being restricted.

Preferably, the projection pressure in the blasting process is in the range between greater than 0.01 MPa and less than 0.05 MPa. Making the projection pressure greater than 0.01 MPa secures kinetic energy that allows the anodized film to be smoothed. Making the projection pressure lower than 0.05 MPa minimizes the configuration change of the inner surface of the top ring groove 13 for smoothing the anodized film 20 while maintaining the design dimension of the top ring groove 13. It is also possible to suppress deformation of chamfered shape of the inlet of the top ring groove 13 of the piston 10 for an internal combustion engine.

Preferably, the lower limit of the shooting pressure in the blasting process is at least 0.015 MPa, more preferably, at least 0.020 MPa, and further preferably, at least 0.025 MPa. Preferably, the upper limit of the projection pressure in the blasting process is at most 0.045 MPa, more preferably, at most 0.040 MPa, and further preferably, at most 0.035 MPa. For example, UNIFINISH manufactured by Sablux Technik AG may be employed as the metal surface processor capable of executing ultra low pressure blasting.

Preferably, the surface roughness Rpk of the blasted anodized film 20 is at most 0.9 µm, and more preferably, at most 0.8 µm. The lower limit of the surface roughness Rpk of the anodized film 20 is not specifically limited for the reason that the smaller the value is, the better the surface roughness is. For example, it is preferable to set the lower limit to be at least 0.5 µm or 0.6 µm. Setting of the surface roughness Rpk of the anodized film 20 to at most 0.9 µm, and furthermore to at most 0.8 µm makes it possible to improve gas-tight sealing between the anodized film 20 on the lower surface 13c of the top ring groove 13 and the top ring 30. It is possible to further reduce the flow rate of blow-by gas in engine operation.

Preferably, the surface roughness Ra of the blasted anodized film 20 is at most 0.8 µm, and more preferably, at most 0.7 µm. The lower limit of the surface roughness Ra of the anodized film 20 is not specifically limited for the reason that the smaller the value is, the better the surface roughness is. For example, it is preferable to set the lower limit to be at most 0.4 µm or 0.5 µm. Setting of the surface roughness Ra of the anodized film 20 to at most 0.8 µm, and further to at most 0.7 µm makes it possible to suppress oil deposition in the valley part of the anodized film 20. It is possible to suppress blow-by gas containing an oil component, and to further suppress emissions of the particle number PN.

Preferably, the surface roughnesses Rpk and Ra satisfy the relationship of Rpk/Ra > 1. This makes it possible to further suppress emissions of the particle number PN. Possible reasons for the use of such relationship will be described below. In the compression and expansion strokes, the inner pressure of the combustion chamber at the side of the piston crown surface 11 is high. The lower surface 32 of the top ring 30 is brought into tight contact with the lower surface 13c of the top ring groove 13. At the time immediately after starting the engine, the surface of the anodized film 20 is hit by the lower surface of the top ring 30 and is worn, resulting in initial conformability. This makes it possible to further improve sealing property with the lower surface 32 of the top ring 30. It is preferable to leave the peak above the core of the roughness curve to a certain extent to improve the initial conformability. In other words, it is considered better to make the surface roughness Rpk greater than the surface roughness Ra.

The thickness of the anodized film 20 is not specifically limited. However, preferably, the upper limit is at most 20 µm, and more preferably, at most 15 µm. Preferably, the lower limit is at least 3 µm, and more preferably, at least 5 µm.

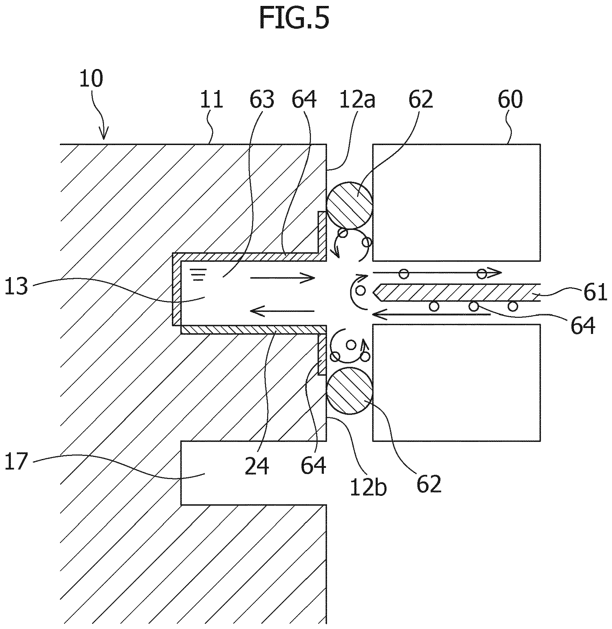

Referring to Figure 5, an explanation will be given with respect to the method for forming the anodized film on the inner surface of the top ring groove of the piston for an internal combustion engine by executing the AC/DC superimposition electrolytic process.

As Figure 5 illustrates, an anodizing treatment device 60 is disposed to surround the outer circumferential side of the top ring groove 13 of the piston 10 for an internal combustion engine. The anodizing treatment device 60 and the piston 10 for an internal combustion engine are brought into tight contact with each other via seal rings 62a, 62b disposed at substantially median positions of the top land 12a and the second land 12b, respectively. When forming an anodized film 24 on an inner surface region of the inner surface of the top ring groove 13, for example, the lower surface 13c, a masking 64 is applied to the other inner surface region of the top ring groove 13, and to the surfaces of the top land 12a and the second land 12b by using a resin, metal spring, or spray coating.

Electrical current is applied between the piston 10 for an internal combustion engine, which serves as the anode and a cathode electrode 61 at the side of the anodizing treatment device 60 simultaneously with supply of processing liquid 63 to the inside of the top ring groove 13 of the piston 10 for an internal combustion engine, and to the seal rings 62a, 62b of the top land 12a and the second land 12b, respectively. This makes it possible to form the anodized film 24 on the aluminum alloy surface of the lower surface 13c as the required region of the parts supplied with the processing liquid 63.

During anodizing treatment, hydrogen bubbles 64 are generated from the cathode electrode 61. A hydrogen bubble 64 is a cause of increase of surface roughness of the anodized film 24. The structure for supplying the processing liquid 63 to areas of the top land 12a and the second land 12b, as shown in Figure 5, causes most of the generated hydrogen bubbles 64 to flow toward the top land 12a and the second land 12b at the lower pressure side. This makes it possible to prevent entry of the hydrogen bubbles 64 to the inside of the top ring groove 13, and form the smooth anodized film 24 with low surface roughness.

### [Example]

An example according to the present invention, and comparative examples, will be described hereinafter.

In the example, the anodized film was formed on the inner surface of the top ring groove of the piston made of aluminum for an internal combustion engine by the procedure as below. First, the piston for an internal combustion engine was cast using an aluminum alloy containing Si at 12% for a predetermined thermal treatment, and subjected to machining for forming the ring groove. The top ring groove was finished by machining to have the surface roughness Rpk of approximately 0.01 µm. The inner surface of the top ring groove was subjected to anodizing treatment through the AC/DC superimposition electrolytic process under conditions in which the energizing time through single application of positive voltage ranging from 20 to 30 µs, and frequency ranging from 10 to 12 kHz through constant voltage anodizing ranging from 30 to 75 V using the sulfate processing liquid with the concentration ranging from 2M to 3M at a temperature from 0 to 10°C.

A metal surface processor (UNIFINISH manufactured by Sablux Technik AG) was operated for executing a blasting process on the anodized film (AC/DC superimposition electrolysis film) with a thickness of approximately 10 µm formed on the lower surface of the top ring groove at a shooting pressure of 0.03 MPa using the non-polish type glass-based blast material (manufactured by Sablux Technik AG) with a median particle diameter of 30 µm.

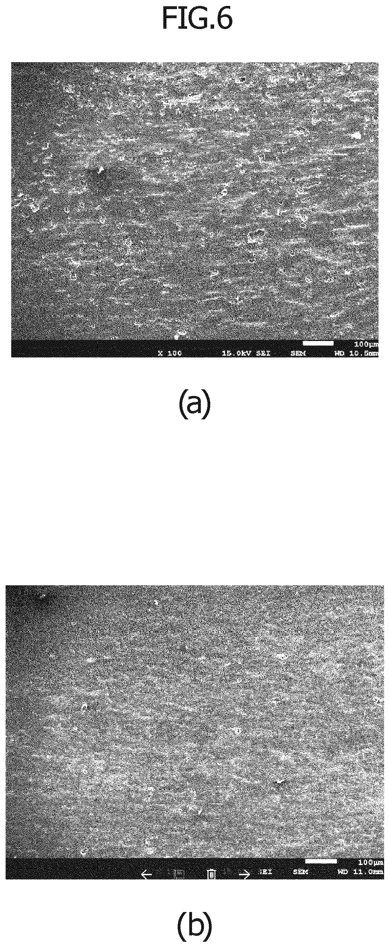

The surface roughnesses Ra and Rpk of the blasted anodized film were measured in conformity with JIS B0601 and JIS B0671-2, respectively. Table 1 shows the measurement results. Figure 6 shows scanning electron microscope (SEM) micrographs showing each surface of the anodized films before and after execution of the blasting process.

The anodized film (comparative example 1) was prepared in the similar way to that of the example, except that the blast processing was not executed for the purpose of comparison. The surface roughnesses Ra and Rpk of the anodized film were measured in a manner similar to that of the example. Furthermore, anodized films (comparative examples 2 to 6) were prepared in a manner similar to that of the example, except that the conditions of the median particle diameter of the blast material and the projection pressure were set as listed in Table 1 for the purpose of comparison. Each of surface roughnesses Ra and Rpk of the anodized films was measured in a manner similar to that of the example. The measurement results are shown in Table 1.

### [Measurement of flow rate of blow-by gas]

Each flow rate of blow-by gas in an actual engine was measured on an experimental basis using the pistons for an internal combustion engine, each having the anodized film according to the example and the comparative examples 1 to 6. The in-line 4-cylinder engine of 1200 cc displacement was operated under conditions of the engine speed set to 6400 rpm WOT, the water temperature set to 90°C, and oil temperature set to 135°C. Table 1 lists the experimental results. Table 1 shows the flow rate of blow-by gas obtained as an average value of flow rates of blow-by gas (unit: L/min) measured for 30 hours from engine start-up, which is expressed as a percentage of the average value of the example.

**[Table 1]**

| | Median particle diameter (µm) | Shooting pressure (MPa) | Ra (µm) | Rpk (µm) | Flow rate of blow-by gas |
|---|---|---|---|---|---|
| Comparative Example 1 | No blasting process | | 1.27 | 1.16 | 153 |
| Comparative Example 2 | 30 | 0.09 | 1.17 | 1.12 | 148 |
| Comparative Example 3 | 30 | 0.05 | 1.21 | 1.15 | 151 |
| Comparative Example 4 | 30 | 0.01 | 1.16 | 1.15 | 149 |
| Comparative Example 5 | 20 | 0.03 | 1.11 | 1.28 | 133 |
| Comparative Example 6 | 50 | 0.03 | 0.97 | 1.36 | 130 |
| Example | 30 | 0.03 | 0.65 | 0.90 | 100 |

Referring to Table 1, the piston for an internal combustion engine according to the example has an anodized film prepared by executing the blasting process under the predetermined conditions. Each of the resultant surface roughnesses Ra and Rpk of the film is less than 1.0 µm. The piston for an internal combustion engine according to the comparative example 1 has the anodized film prepared without executing the blasting process. Each of the resultant surface roughnesses Ra and Rpk of the film is equal to or greater than 1.1 µm. The flow rate of blow-by gas of the piston for an internal combustion engine according to the example is reduced to less than that of the piston of the comparative example 1 by approximately 35%.

From comparison of the SEM micrograph of the anodized film surface before blasting as shown in Figure 6(a) and the SEM micrograph of the anodized film surface after blasting as shown in Figure 6(b), it is revealed that the part that appears to be white is markedly reduced. The part that appears to be white indicates the local peak of the plateau structure. It is seen that the peak has been reduced by the blasting. This coincides with reduction in the surface roughness Rpk as a result of executing the blasting process.

In comparative examples 2 to 6, the blast material having a median particle diameter of 50 µm or more, or 20 µm or less was used, and the blasting was executed at a shooting pressure of 0.05 MPa or more, or 0.01 MPa or less. Each of the resultant films had a surface roughness Ra or/and Rpk equal to or greater than 1.1 µm. Additionally, the resultant effect for reducing the flow rate of blow-by gas was low. It was found that formation of the anodized film with surface roughnesses Ra and Rpk of less than 1.0 µm allows significant reduction in the flow rate of blow-by gas.

As the surface roughness Ra of the example is reduced to be significantly less than the surface roughness Ra of the comparative example 1, deposition of oil into the valley part of the anodized film can be suppressed. This makes it possible to suppress blow-by gas containing an oil component so that the particle number PN can also be reduced significantly.

### [Reference Signs List]

- 10: Piston for internal combustion engine
- 11: Piston crown surface
- 12a: Top land
- 12b: Second land
- 13: Top ring groove
- 13c: Lower surface of top ring groove
- 15: Aluminum alloy member
- 16: Silicon
- 20: Anodized film
- 21: DC electrolysis film
- 22: Void
- 23: AC/DC superimposition electrolysis film
- 30: Top ring
- 40: Cylinder
- 50: Blast material
- 60: Anodizing treatment device
- 61: Cathode electrode
- 62: Seal ring
- 63: Processing liquid
- 64: Hydrogen bubble

## Claims

1. A method for manufacturing a piston for an internal combustion engine, comprising the steps of:
forming an anodized film on an inner surface of a top ring groove of a piston for an internal combustion engine by an AC/DC superimposition electrolytic process; and
blasting the anodized film at a shooting pressure ranging between greater than 0.01 MPa and less than 0.05 MPa by using a blasting material having a median particle diameter ranging between greater than 20 µm and less than 50 µm .

2. A piston for an internal combustion engine having a top ring groove in an outer circumferential surface, comprising:
an anodized film on an inner surface of the top ring groove,
wherein a cell of the anodized film extends in a random direction with respect to the inner surface of the top ring groove, and encloses a periphery of silicon in the anodized film while branching in the random direction, and
wherein the anodized film has a surface roughness Rpk according to JIS B0671-2 of less than 1.0 µm, and a surface roughness Ra according to JIS B0601 of less than 1.0 µm.

3. The piston for an internal combustion engine as claimed in claim 2, wherein the anodized film is formed only on an inner surface region of the inner surface of the top ring groove which is on a second ring groove side.

4. The piston for an internal combustion engine as claimed in claim 2, wherein the anodized film is formed only on an inner surface region of the inner surface of the top ring groove which is on a second ring groove side and is in contact with a top ring.
